# DEMANDE DE BREVET EUROPEEN

(11) **EP 1 705 495 A2**
(43) Date de publication de la demande: **27.09.2006**
(21) Numéro de dépôt: 06290404.0
(22) Date de dépôt: 13.03.2006
(51) Int. Cl.: G01S 3/06, G01S 3/781

(54) **Procédé d'amélioration de la détection d'un objet**

(30) Priorité: 21.03.2005 FR 0200763
(71) Demandeur: GIAT Industries, 78000 Versailles (FR)
(72) Inventeur: Miotti, Luc, 78960 Voisin le Bretonneux (FR)
(74) Mandataire: Célanie, Christian

(57) **Abrégé**

L'invention concerne un procédé d'amélioration de la détection d'un objet 2 évoluant dans un champ d'observation 3 à l'aide d'un capteur angulaire 1, ce capteur présentant un cône d'incertitude de localisation ayant une direction A.

On détermine les obstacles présents dans le cône d'incertitude, on évalue les angles solides de champ 7, 8 couverts ces obstacles dans le cône d'incertitude, on calcule un cône d'incertitude réduit 9 en retranchant du cône d'incertitude initial 4 les cônes de champ 7, 8 couverts pas ces obstacles.

## Description

Le secteur technique de la présente invention est celui de la détection des objets à l'aide d'un capteur angulaire.

Lorsqu'un objet se déplace dans une zone d'évolution, il peut soit détecter une menace soit être détecté. Mais les obstacles naturels présents dans la zone peuvent masquer partiellement ou totalement l'objet en raison des déplacements de l'un ou de l'autre. Actuellement, lorsqu'un capteur angulaire (détecteur d'alerte laser DAL, détection de départ missile DDM, antenne directive, etc) détecte un objet, il fournit à un opérateur un demi-cône représentant la zone d'incertitude où se trouve l'objet. Cette zone doit être la plus réduite possible afin d'augmenter les probabilités de détection de la cible ou de la menace et de présenter à l'opérateur une image de la menace sans qu'il ait besoin de faire une recherche ou des réglages.

Le but de la présente invention est de proposer un procédé et un dispositif pour réduire l'incertitude de localisation d'un objet et un dispositif de mise en oeuvre de ce procédé.

L'invention a donc pour objet un procédé d'amélioration de la détection d'un objet évoluant dans un champ d'observation d'un capteur angulaire, capteur présentant un cône d'incertitude de localisation ayant une direction A, procédé caractérisé en ce qu'on détermine les obstacles présents dans le cône d'incertitude, on évalue les angles solides de champ couverts ces obstacles dans le cône d'incertitude, on calcule un cône d'incertitude réduit en retranchant du cône d'incertitude initial les cônes de champ couverts pas ces obstacles.

Selon une caractéristique de l'invention, on détermine les obstacles présents dans le cône d'incertitude à l'aide d'une base de données cartographiques couplée à un moyen de calcul de la direction A et de l'angle solide du cône d'incertitude.

Selon une autre caractéristique de l'invention, on détermine les obstacles présents dans le cône d'incertitude à l'aide d'une bibliothèque d'obstacles couplée éventuellement à une caméra et/ou un télémètre et accessible via une interface homme machine.

Selon encore une autre caractéristique de l'invention, on met en oeuvre au moins deux capteurs angulaires situés à distance l'un de l'autre et on combine les zones d'incertitude de ces deux capteurs pour réduire la zone d'incertitude effective.

L'invention concerne également un dispositif pour la mise en oeuvre du procédé de d'amélioration de la détection d'un objet, caractérisé en ce qu'il comprend un capteur angulaire disposé à distance d'un objet évoluant dans un champ d'observation dudit capteur, ce dernier présentant un cône ou angle solide orienté suivant une direction A, un moyen pour déterminer les obstacles présents dans le cône d'incertitude et pour calculer les cônes ou angles solides de ce champ couverts par ces obstacles dans le cône d'incertitude, et un moyen de calcul assurant la détermination d'un cône ou angle solide d'incertitude réduit par la soustraction du cône d'incertitude initial des cônes de champ couverts par les obstacles.

Selon une caractéristique, le dispositif comprend deux capteurs délimitant deux angles d'incertitude et un moyen pour coupler les valeurs obtenues afin de déterminer l'angle d'incertitude.

Selon encore une autre caractéristique, le capteur angulaire est un capteur de détection laser.

Un tout premier avantage du procédé et du dispositif selon l'invention réside dans une exploitation maximale des informations collectées sur le terrain ou bien fournies par une base de données cartographiques afin de limiter les incertitudes.

Un autre avantage réside dans le fait que la réduction de l'angle d'incertitude peut être entièrement automatisée.

Un autre avantage encore réside dans le fait que l'angle d'incertitude est déterminé en temps réel pour permettre la prise de décision.

Un autre avantage encore de l'invention est de faciliter la visualisation d'une menace sans avoir à effectuer une recherche.

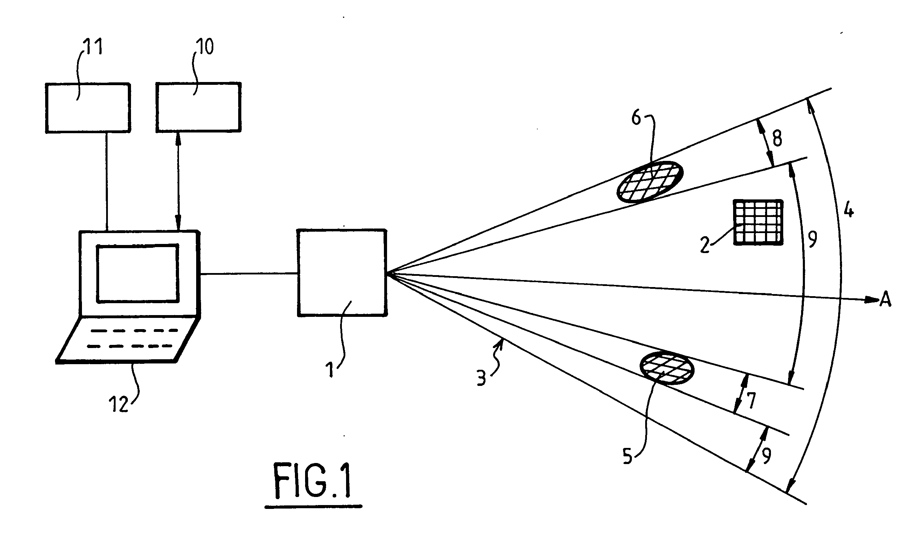

D'autres caractéristiques, détails et avantages de l'invention ressortiront plus clairement de la description donnée ci-après à titre indicatif en relation avec un dessin sur lequel la figure 1 représente un exemple de réalisation de l'invention.

Sur la figure 1, on a représenté un capteur 1 fournissant à un opérateur disposé à proximité ou éloigné un champ d'observation 3 d'un objet 2 éloigné. Ce champ est ici représenté dans un plan horizontal comme un angle d'incertitude 4. Dans l'espace, le champ est en fait une zone d'incertitude globalement conique. Par la suite et dans la description, on parlera d'angle solide pour l'angle d'incertitude, c'est à dire de volume délimité dans l'espace par un cône. La valeur de l'angle solide d'ouverture de la zone dépend des caractéristiques physiques du capteur (données du constructeur). Par ailleurs, ce champ conique a un axe orienté suivant une direction A qui dépend de l'orientation qui est donnée au capteur par exemple par des moyens de motorisation (non représentés). La direction A est définie par rapport à un repère (par exemple lié à un véhicule portant le capteur) par des angles de site et de gisement.

Le capteur 1 est généralement un détecteur d'alerte laser (DAL), un détecteur de départ missile (DDM), une antenne directive, une caméra infra rouge, une caméra dans le spectre visible. Ce détecteur est apte à détecter un flash laser ou toute autre menace. Dans le champ d'observation, des obstacles 5 et 6 sont présents et masquent l'observation du capteur 1 en définissant des angles solides de présence 7 et 8. Ces obstacles peuvent être de différents types : colline, forêt dense, constructions. Il est souhaitable opérationnellement de tenir compte de la présence d'obstacles situés dans le champ d'observation 3 pour réduire l'angle solide d'incertitude théorique 4 du capteur et améliorer ainsi précision de la localisation de l'objet.

Conformément à l'invention, un moyen de calcul 10 permet de soustraire ces angles 7 et 8 solides de présence d'obstacles et ainsi fournir un angle solide d'incertitude 9 correspondant au champ réduit dans lequel l'objet doit se trouver pour être détecté. Un calculateur du commerce 12 peut être mis en oeuvre pour réaliser cette fonction.

En raison du fait que l'objet 2 et le détecteur 1 sont éloignés l'un de l'autre, les obstacles ne sont pas connus et leur présence et leur position doivent être introduites dans le champ d'observation. Un opérateur réalise cette introduction à l'aide d'un système 11, un système de cartographie ou une caméra par exemple, en introduisant la conformation du champ d'observation ce qui permet de visualiser tous les obstacles pouvant se présenter entre le capteur et l'objet. Le calculateur 12 utilise les données cartographiques de la zone observée (données qui sont contenues dans une base de données cartographiques) et il connaît aussi la direction d'observation A du détecteur 1 (fournie par le moyen de positionnement du détecteur) et l'ouverture du cône d'incertitude 4 de ce détecteur. Il est donc capable de déterminer automatiquement quels obstacles présents dans la base cartographique se trouvent dans le cône d'incertitude (obstacles tels que forêt, colline,...). Il va donc calculer un premier champ réduit 9 en éliminant les angles solides 7 et 8 du champ d'observation.

Le calculateur 12 fournira à l'utilisateur par le biais d'une interface homme machine appropriée (un écran par exemple) une visualisation du terrain sur laquelle sera superposé le champ d'incertitude réduit 9 ainsi calculé. Conformément à une autre caractéristique de l'invention, le calculateur offrira la possibilité à l'utilisateur d'introduire alors d'autres obstacles qui étaient absents de la base cartographique mais se trouvent sur le terrain (par exemple des murs ou des bâtiments). Ces obstacles seront introduits par exemple à partir d'une bibliothèque accessible via des menus déroulants. Les dimensions de ces obstacles seront introduites manuellement par l'opérateur ou calculées grâce à un moyen de mesure tel une caméra couplée à un télémètre. Après leur introduction, ils apparaîtront donc sur l'interface de l'utilisateur et le calculateur déterminera automatiquement la valeur du nouveau champ d'incertitude réduit 9.

On a noté précédemment que lorsqu'on mentionne dans la présente description un secteur angulaire ou un angle, on parle en fait d'angle solide, c'est à dire de volume délimité dans l'espace par un cône. Il est bien connu que le capteur 1 fournit une information suivant un volume sous forme d'un cône dont le sommet est situé au niveau du capteur. C'est dans ce cône que les obstacles sont repérés, également sous la forme d'angles solides.

Les informations obtenues sont dirigées vers le calculateur 12 qui va permettre de fournir à un opérateur des informations sur la présence d'un ennemi dans un champ réduit pour mieux appréhender la menace et prendre une décision adéquate.

Si on couple la détection par deux capteurs séparés l'un de l'autre, on voit qu'on réduit dans de fortes proportions par recoupement la zone d'incertitude.

Il est possible de coupler les informations de détection fournies par deux capteurs séparés l'un de l'autre. Il est évident que si un objet est ainsi détecté par deux capteurs, il se trouve dans une zone qui est l'intersection des angles solides ou des champs d'incertitude de chaque capteur. Un tel couplage est classique. Il peut être associé au moyen de réduction d'incertitude proposé par l'invention. Chaque capteur a ainsi un champ d'incertitude qui est réduit grâce à l'invention, et l'objet se trouve donc dans une zone de détection qui est l'intersection de deux zones réduites.

## Revendications

1. Procédé d'amélioration de la détection d'un objet (2) évoluant dans un champ d'observation (3) d'un capteur angulaire (1), capteur présentant un cône d'incertitude de localisation ayant une direction A, procédé **caractérisé en ce qu'**on détermine les obstacles présents dans le cône d'incertitude, on évalue les angles solides de champ (7, 8) couverts ces obstacles dans le cône d'incertitude, on calcule un cône d'incertitude réduit (9) en retranchant du cône d'incertitude initial (4) les cônes de champ (7, 8) couverts pas ces obstacles.

2. Procédé d'amélioration de la détection selon la revendication 1, **caractérisé en ce qu'**on détermine les obstacles présents dans le cône d'incertitude à l'aide d'une base de données cartographiques couplée à un moyen de calcul de la direction A et de l'angle solide du cône d'incertitude.

3. Procédé d'amélioration de détection selon la revendication 1, **caractérisé en ce qu'**on détermine les obstacles (5, 6) présents dans le cône d'incertitude à l'aide d'une bibliothèque d'obstacles couplée éventuellement à une caméra et/ou un télémètre et accessible via une interface homme machine.

4. Procédé d'amélioration de détection selon l'une quelconque des revendications précédentes, **caractérisé en ce qu'**on met en oeuvre au moins deux capteurs angulaires situés à distance l'un de l'autre et on combine les zones d'incertitude de ces deux capteurs pour réduire la zone d'incertitude effective.

5. Dispositif pour la mise en oeuvre du procédé selon la revendication 1, **caractérisé en ce qu'**il comprend un capteur angulaire (1) disposé à distance d'un objet (2) évoluant dans un champ d'observation (3) dudit capteur, ce dernier présentant un cône ou angle solide orienté suivant une direction A, un moyen pour déterminer les obstacles présents dans le cône d'incertitude et pour calculer les cônes ou angles solides de ce champ (7, 8) couverts par ces obstacles dans le cône d'incertitude, et un moyen de calcul assurant la détermination d'un cône ou angle solide d'incertitude réduit (9) par la soustraction du cône d'incertitude initial (4) des cônes de champ (7, 8) couverts par les obstacles.

6. Dispositif selon la revendication 4, **caractérisé en ce qu'**il comprend deux capteurs délimitant deux angles d'incertitude et un moyen pour coupler les valeurs obtenues afin de déterminer l'angle d'incertitude.

7. Dispositif selon la revendication 5 ou 6, **caractérisé en ce que** le capteur angulaire (1) est un capteur de détection laser.
